(19) Europäisches Patentamt / European Patent Office / Office européen des brevets

(11) **EP 2 251 759 B1**

(12) **FASCICULE DE BREVET EUROPEEN**

(45) Date de publication et mention
de la délivrance du brevet:
**14.11.2012 Bulletin 2012/46**

(21) Numéro de dépôt: **10162443.5**

(22) Date de dépôt: **10.05.2010**

(51) Int Cl.:
*G05D 1/12* (2006.01)      *F41G 7/00* (2006.01)
*G01C 21/00* (2006.01)      *F42B 15/01* (2006.01)
*F41H 11/00* (2006.01)

(54) **Procédé et système d'estimation d'une trajectoire d'un mobile**

Verfahren und System zur Abschätzung der Bewegungsbahn einer Mobilgeräts

Method and system for estimating the path of a mobile

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **15.05.2009 FR 0953222**

(43) Date de publication de la demande:
**17.11.2010 Bulletin 2010/46**

(73) Titulaire: **MBDA France**
**75016 Paris (FR)**

(72) Inventeur: **Bourzier, Laurent**
**18000, BOURGES (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A1- 1 909 067      FR-A1- 2 642 515**

**Description**

Arrière-plan de l'invention

La présente invention se situe dans le domaine de la validation des capacités de fonctionnement d'un mobile ou engin volant, tel que par exemple un drone, un missile, etc.

Elle concerne plus particulièrement l'estimation de la trajectoire d'un mobile dans un environnement réel de navigation, notamment après détection d'un dépassement ou d'un changement d'un objectif désigné pour ce mobile. On entend ici par objectif, une cible, un but à atteindre par le mobile, désigné par exemple sous la forme de coordonnées géographiques.

Au sens de l'invention, un dépassement d'un objectif par un mobile signifie que le mobile n'a pas atteint cet objectif (par exemple, il a manqué l'objectif). De façon similaire, on parlera, dans la suite de la description, d'attaque d'un objectif par un mobile lorsque celui-ci tente d'atteindre cet objectif.

L'invention permet ainsi, de façon privilégiée mais non limitative, d'évaluer la capacité d'un mobile à réattaquer un objectif manqué et/ou sa capacité à changer d'objectifs en cours de mission.

Dans l'état actuel de la technique, il existe des procédés de simulation hybride permettant d'estimer la trajectoire d'un mobile tel qu'un avion ou une fusée, de façon précise et à un coût raisonnable.

Ces procédés de simulation hybride s'appuient :

- d'une part, sur des sous-ensembles réels, comme par exemple, un simulateur de mouvements angulaires sur lequel est embarqué le mobile ou une partie de celui-ci, et comprenant certains éléments du mobile tels que sa centrale inertielle, son calculateur, etc. ; et
- d'autre part, sur des modèles mathématiques remplaçant des éléments du mobile non mis en oeuvre et modélisant l'environnement de navigation du mobile, comme par exemple un modèle mathématique pour la propulsion, l'aérodynamique, pour l'atmosphère, la Terre, etc.

Un tel procédé de simulation est décrit par exemple dans le document EP 1 909 067 et dans le document FR 2 927 418. Il est utilisé pour valider une centrale inertielle embarquée sur un mobile, en comparant une trajectoire estimée du mobile à l'aide du procédé de simulation hybride avec une trajectoire de référence.

Toutefois, on ne connaît pas aujourd'hui de procédé ni de système de simulation hybride, permettant d'estimer la trajectoire d'un mobile après détection d'un événement représentatif d'un dépassement d'un objectif à atteindre par ce mobile ou d'un changement d'objectif nécessitant pour l'atteindre des déplacements angulaires supérieurs à ceux offerts pas les moyens mis en oeuvre dans le système de simulation hybride, en vue notamment de permettre l'évaluation de la capacité de réattaque du mobile ou de sa capacité de changement d'objectifs en cours de mission.

Objet et résumé de l'invention

La présente invention répond notamment à ce besoin en proposant un procédé d'estimation d'une trajectoire d'un mobile dans un environnement réel de navigation comprenant, la fourniture, par un outil de simulation numérique modélisant le mobile dans cet environnement, de commandes cinématiques à un simulateur de mouvements embarquant le mobile et à une cible représentative d'un objectif à atteindre par le mobile, cet outil de simulation étant alimenté par des commandes de pilotage délivrées par un calculateur du mobile et délivrant, en réponse à ces commandes de pilotage, des points de la trajectoire. Conformément à l'invention, le procédé d'estimation comprend en outre :

- sur détection d'un événement représentatif d'un dépassement ou d'un changement d'un premier objectif désigné pour ce mobile, une phase de positionnement associée à un second objectif désigné pour le mobile, comprenant :

  - la comparaison de positions exécutées par le simulateur de mouvements, en réponse à des premières commandes cinématiques de transition, avec une première position de consigne prédéterminée, et l'activation d'un premier marqueur lorsqu'une position sensiblement égale à la première position de consigne est détectée ;
  - la comparaison de positions exécutées par la cible, en réponse à des secondes commandes cinématiques de transition, avec une seconde position de consigne prédéterminée, et l'activation d'un second marqueur lorsqu'une position sensiblement égale à la seconde position de consigne est détectée ;

- lorsque les premier et second marqueurs sont activés, une étape d'évaluation d'une différence entre la commande cinématique courante fournie au simulateur de mouvements et la commande cinématique courante fournie à la cible par l'outil de simulation ; et
- si cette différence est inférieure à un seuil déterminé, une phase de pilotage comportant l'application de termes correctifs aux commandes cinématiques issues de l'outil des simulation avant leur fourniture au simulateur de mouvements et à la cible, ces termes correctifs étant liés aux positions de consigne.

Corrélativement, l'invention vise également un système de simulation hybride permettant l'estimation d'une trajectoire d'un mobile dans un environnement réel de navigation, ledit système comprenant :

- un simulateur de mouvements embarquant le mobile ;
- une cible représentative d'un objectif à atteindre par le mobile ; et
- un outil de simulation numérique modélisant le mobile dans l'environnement réel de navigation, et adapté à fournir des commandes cinématiques au simulateur de mouvements et à la cible, cet outil de simulation étant alimenté par des commandes de pilotage délivrées par un calculateur du mobile et délivrant, en réponse à ces commandes de pilotage, des points de la trajectoire ;
  ledit système comprenant en outre :
- des moyens pour détecter un événement représentatif d'un dépassement ou d'un changement d'un premier objectif désigné pour ce mobile ;
- des moyens, activés sur détection d'un tel événement et durant une phase de positionnement associée à un second objectif désigné pour le mobile :

  - pour comparer des positions exécutées par le simulateur de mouvements en réponse à des premières commandes cinématiques de transition avec une première position de consigne prédéterminée, et activer un premier marqueur lorsqu'une position sensiblement égale à la première position de consigne est détectée ; et
  - pour comparer des positions exécutées par la cible en réponse à des secondes commandes cinématiques de transition avec une seconde position de consigne prédéterminée, et activer un second marqueur lorsqu'une position sensiblement égale à la seconde position de consigne est détectée ;

- des moyens pour détecter lorsque les premier et second marqueurs sont activés et pour évaluer, le cas échéant, une différence entre la commande cinématique courante fournie au simulateur de mouvements et la commande cinématique courante fournie à la cible par l'outil de simulation ;
- des moyens pour comparer cette différence avec un seuil déterminé ; et
- des moyens, activés lorsque la différence est inférieure audit seuil, pour appliquer, au cours d'une phase de pilotage, des termes correctifs aux commandes cinématiques issues de l'outil des simulation avant leur fourniture au simulateur de mouvements et à la cible, ces termes correctifs étant liés aux positions de consigne.

L'invention s'appuie donc avantageusement sur un simulateur hybride en boucle fermée. Celui-ci est composé notamment d'un outil de simulation numérique ainsi que d'équipements réels tels qu'un simulateur de mouvements embarquant le mobile, une cible représentant l'objectif à atteindre par le mobile, et un calculateur du mobile adapté à délivrer des commandes de pilotage à l'outil de simulation numérique, permettant ainsi le calcul des points de la trajectoire. Ainsi, la trajectoire du mobile estimée à l'aide de l'invention est très proche d'une trajectoire réelle qu'aurait ce mobile.

Lorsque le second objectif correspond au premier objectif, cette trajectoire reflète le comportement du mobile en cas de dépassement de son objectif et de réattaque de celui-ci. Inversement, lorsque le premier et le second objectifs sont distincts, la trajectoire estimée à l'aide de l'invention reflète le comportement du mobile en cas de changement d'objectifs opéré en cours du mission.

Le positionnement de la cible et du mobile par rapport à des positions de consigne prédéterminées est réalisé, au cours de la phase dite de positionnement, à l'aide de commandes cinématiques de transition fournies au simulateur de mouvements et à la cible, venant se substituer aux commandes cinématiques issues de l'outil de simulation. Ainsi le positionnement du mobile et de la cible au cours de la phase de positionnement est simplifié. Cette phase de positionnement permet de s'assurer que l'estimation de la trajectoire obtenue représente de façon précise une phase prédéfinie de l'attaque du second objectif.

Ainsi, préférentiellement, ces positions de consigne seront choisies de sorte que la trajectoire du mobile correspondant à la remise en oeuvre fonctionnelle de l'équipement de guidage terminal du mobile (par exemple, de son autodirecteur) en vue d'atteindre le second objectif, puisse être estimée. Cette phase correspond en effet à une phase critique dans la détection et la poursuite du second objectif. Une analyse de la trajectoire du mobile estimée sur cette phase permet de déterminer si le second objectif a été atteint par le mobile. Il est alors possible d'évaluer, en fonction des objectifs désignés pour le mobile, sa capacité de réattaque d'un objectif ou sa capacité de changement et d'attaque d'objectifs en cours de mission.

En outre, de façon connue, les simulateurs de mouvements angulaires et les cibles actuellement disponibles ont, pour des raisons de coût et de faisabilité, des capacités limitées, notamment en termes de débattement (i.e. excursion) angulaire : par exemple, plus ou moins 110° pour un simulateur de mouvements angulaires, plus ou moins 40° pour une cible mobile. Cette limitation est par ailleurs amplifiée du fait de l'utilisation de câbles et de bancs pour réaliser l'interface entre les différents éléments du simulateur hybride.

L'invention propose de compenser ces débattements angulaires limités à l'aide de termes correctifs, appliqués lors d'une phase dite de pilotage sur les commandes cinématiques issues de l'outil de simulation, avant leur fourniture au simulateur de mouvements et à la cible. Ces termes correctifs sont liés aux positions de consigne considérées pour la cible et pour le mobile. Il est ainsi possible, avec l'invention, d'estimer n'importe quelle trajectoire d'un mobile, indépendamment de la position des premier et second objectifs.

On notera qu'au sens de l'invention, on entend par application d'un terme correctif sur une commande cinématique, l'application d'un terme correctif sur une ou plusieurs des composantes de cette commande cinématique (voire sur toutes ses composantes), la valeur du terme correctif appliqué pouvant être différente selon les composantes.

L'invention a donc une application privilégiée dès lors que la position du second objectif par rapport à la position du premier objectif requiert une trajectoire du mobile incompatible avec les capacités en termes de débattement angulaire du simulateur de mouvements et de la cible. Cette situation se présente notamment lorsque le second objectif correspond au premier objectif et que le mobile doit effectuer une rotation quasi-complète pour se repositionner dans la direction de la cible.

Dans un mode particulier de réalisation du procédé d'estimation selon l'invention, les commandes cinématiques fournies par l'outil de simulation au simulateur de mouvement comportent une composante de lacet et les commandes cinématiques fournies par l'outil de simulation à la cible comportent une composante de gisement. On entend ici par composante de gisement, la composante angulaire de la commande cinématique dans le plan horizontal. Dans ce mode de réalisation, tant qu'un événement représentatif d'un dépassement ou d'un changement du premier objectif désigné pour le mobile n'a pas été détecté, on applique sur les composantes de lacet et sur les composantes de gisement des commandes cinématiques un terme de compensation angulaire avant leur fourniture respectivement au simulateur de mouvements et à la cible.

Ainsi, dans ce mode particulier de réalisation, une compensation est également appliquée lors de l'attaque par le mobile du premier objectif. Cette compensation permet de s'affranchir d'une trajectoire à suivre par le mobile pour atteindre le premier objectif incompatible avec les capacités angulaires du simulateur de mouvements et de la cible.

Par exemple, si la trajectoire du mobile est en direction du Sud, alors que l'axe de lacet du simulateur de mouvements présente un débattement angulaire tel qu'il permet de prendre une position angulaire de plus ou moins 90° autour du Nord, on peut appliquer une compensation angulaire de 180°, de sorte à simuler une trajectoire en direction du Sud. Le décalage angulaire est appliqué aussi bien sur l'axe de lacet de la commande cinématique du simulateur de mouvements que sur l'axe de gisement de la commande cinématique de la cible.

Dans un mode particulier de réalisation, lorsqu'un changement de direction du mobile est requis en vue d'atteindre le second objectif par rapport à une direction empruntée par le mobile pour atteindre le premier objectif, la phase de positionnement comprend en outre une étape de détermination du sens de rotation adopté par le mobile pour changer de direction, les première et seconde positions de consigne étant choisies en fonction de ce sens de rotation.

En effet, pour se replacer dans la direction supposée de la cible, le mobile peut, sans que cela soit connu au préalable, effectuer un changement de direction dans le sens horaire ou dans le sens antihoraire.

Ce mode de réalisation permet d'adapter les positions de consigne à respecter par la cible et le simulateur de mouvements en fonction du sens de rotation du mobile, ce qui va permettre de dérouler de façon réaliste :

- la fin de la phase d'alignement du mobile sur le second objectif ;
- la mise en oeuvre fonctionnelle de l'équipement assurant le guidage terminal du mobile ; et
- le guidage terminal du mobile sur le second objectif en vue de l'atteindre.

Selon une variante, pendant l'étape de détermination, les commandes cinématiques de transition fournies au simulateur de mouvements et à la cible peuvent être constantes. Ces commandes cinématiques de transition constantes peuvent comprendre par exemple les positions exécutées par le simulateur de mouvements et par la cible au moment de la détection de l'événement.

Dans un mode particulier de réalisation de l'invention, le seuil à franchir pour accéder à la phase de pilotage dépend des positions exécutées respectivement par le simulateur de mouvements et par la cible lors de l'activation respectivement du premier et du second marqueurs, et du sens de rotation adopté par le mobile pour changer de direction.

En variante, le seuil peut être prédéterminé et dépendre notamment des positions de consigne.

Dans un mode de réalisation de l'invention, la phase de pilotage comprend en outre l'évaluation des termes correctifs à partir :

- des positions de consignes ; et
- des commandes cinématiques fournies par l'outil de simulation au moment où l'on détecte que la différence est inférieure au seuil prédéterminé.

Dans un autre mode de réalisation de l'invention, la phase de pilotage comprend en outre l'évaluation des termes correctifs à partir :

- des positions exécutées par le simulateur de mouvements et par la cible respectivement au moment de l'activation du premier et du second marqueur ; et
- des commandes cinématiques fournies par l'outil de simulation au moment où l'on détecte que la différence est inférieure au seuil déterminé.

On obtient ainsi une valeur plus précise des termes correctifs à appliquer sur les commandes cinématiques avant leur fourniture au simulateur de mouvements et à la cible.

Dans un mode particulier de réalisation, les commandes de pilotage sont évaluées par le calculateur du mobile à partir :

- de données inertielles de mesure fournies par une centrale inertielle du mobile embarqué sur le simulateur de mouvements ;
- de données inertielles de simulation représentatives de données inertielles censées être fournies par la centrale inertielle dans l'environnement réel de navigation ; et
- de données inertielles théoriques représentatives des données inertielles de mesure fournies par la centrale inertielle, ces données inertielles théoriques étant évaluées à partir de commandes cinématiques exécutées par le simulateur de mouvements.

Préférentiellement, les commandes de pilotage sont calculées en fonction de données inertielles I définies par I=T2+R-T1 où T2, R et T1 désignent respectivement les données inertielles de simulation, les données inertielles de mesure et les données inertielles théoriques.

Ainsi, la phase de positionnement est transparente dans l'estimation de la trajectoire du mobile.

En effet, les données inertielles de mesure et les données inertielles théoriques dépendant chacune des commandes (i.e. des données) cinématiques réellement exécutées par le simulateur de mouvements, elles restent cohérentes les unes par rapport aux autres, même si le simulateur de mouvements n'exécute pas correctement les commandes cinématiques ou si celles-ci ne sont pas correctement dimensionnées.

Ainsi, quelles que soient les commandes cinématiques fournies au simulateur de mouvements (ou même dans un cas extrême, en cas d'absence de commandes cinématiques variables fournies au simulateur de mouvements), cela n'a pas de conséquence sur les commandes de pilotage, ni de ce fait sur la trajectoire estimée.

On peut donc utiliser un simulateur de mouvements sous-dimensionné pour des transitoires à forte dynamique angulaire de la trajectoire. Ceci permet de dérouler une trajectoire précise du mobile à un moindre coût.

Dans un autre mode de réalisation, les commandes de pilotage sont évaluées par le calculateur du mobile à partir de données inertielles obtenues par simulation uniquement.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

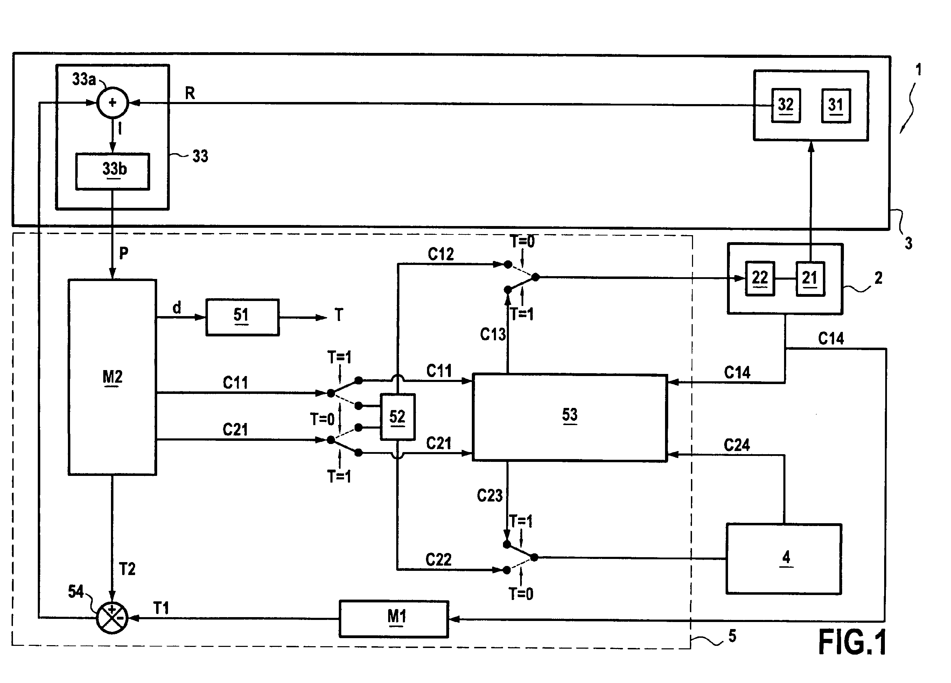

- la figure 1 représente, dans un mode particulier de réalisation, un système d'estimation conforme à l'invention ;

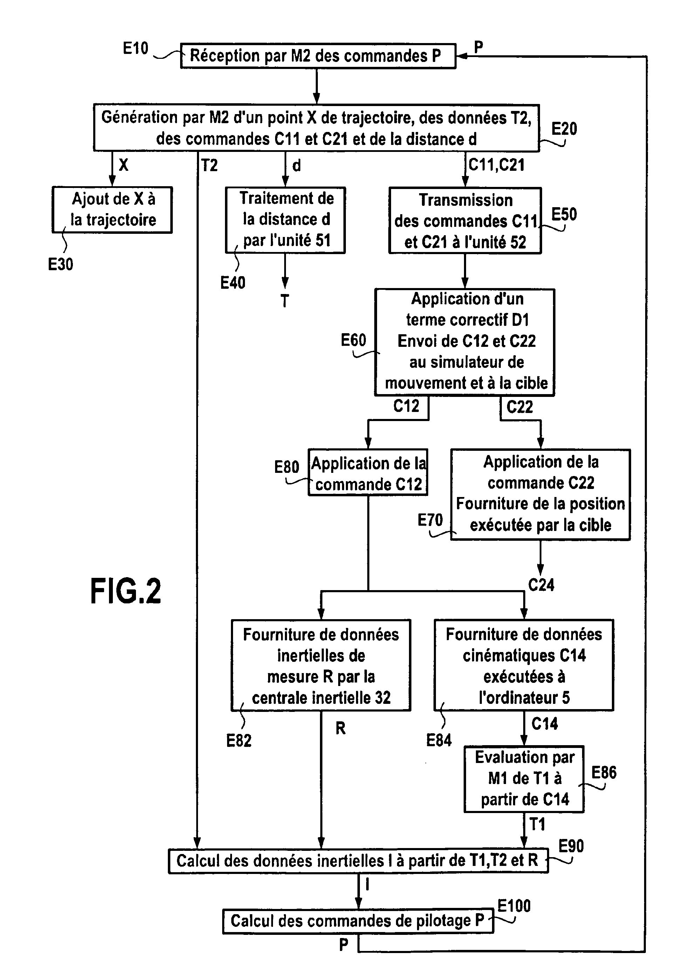

- la figure 2 représente, dans un mode particulier de réalisation, les principales étapes du procédé d'estimation selon l'invention mises en oeuvre durant une première partie de la simulation hybride pendant laquelle le mobile tente d'atteindre un premier objectif désigné, par le système d'estimation représenté sur la figure 1 ;

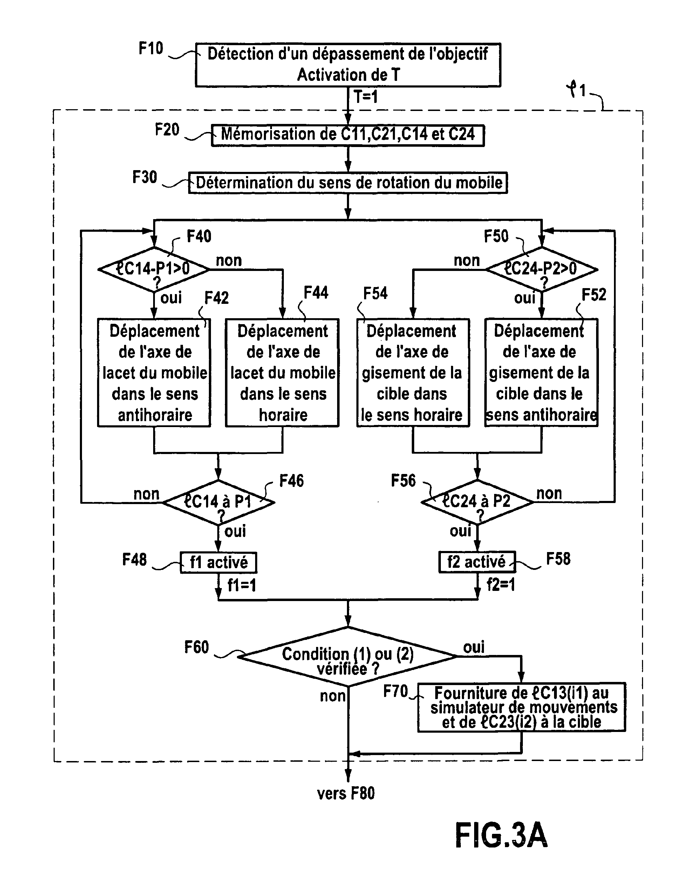

- la figure 3A représente, dans un mode particulier de réalisation, les principales étapes du procédé d'estimation selon l'invention mises en oeuvre durant une phase de positionnement d'une seconde partie de la simulation hybride pendant laquelle le mobile tente d'atteindre un second objectif désigné, par le système d'estimation représenté sur la figure 1 ; et

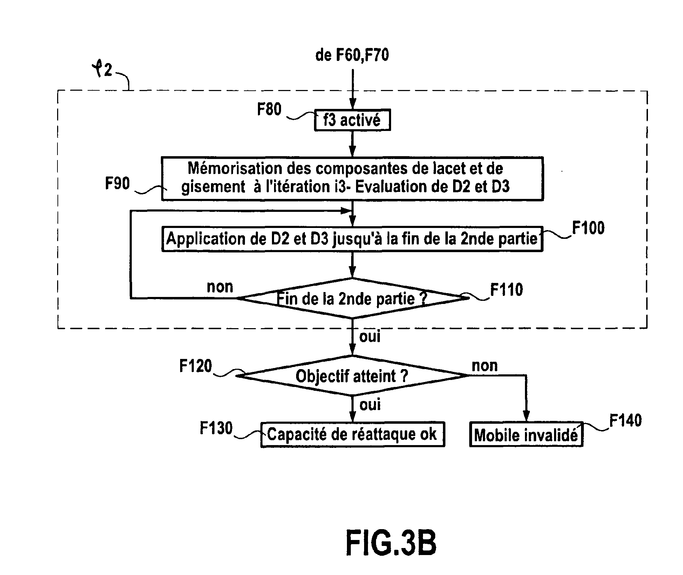

- la figure 3B représente, dans un mode particulier de réalisation, les principales étapes du procédé d'estimation selon l'invention mises en oeuvre durant une phase de pilotage de la seconde partie de la simulation hybride, faisant suite à la phase de positionnement représentée sur la figure 3A.

Description détaillée d'un mode de réalisation

Comme décrit précédemment, l'invention vise un procédé et un système d'estimation d'une trajectoire d'un mobile, tel un drone ou un missile, dans un environnement réel de navigation, en vue par exemple d'évaluer sa capacité de réattaque d'un objectif ou sa capacité à changer d'objectifs et attaquer ces nouveaux objectifs en cours de mission.

Conformément à l'invention, la trajectoire du mobile est calculée à l'aide d'une architecture de simulation hybride utilisant d'une part des sous-ensembles réels (ex. calculateur de bord et centrale inertielle du mobile, simulateur de mouvements angulaires, cible représentative d'un objectif à atteindre par le mobile) et d'autre part des modèles numériques du mobile (ex. propulsion, consommation de carburant, centrale inertielle) et de son environnement (ex. atmosphère, effets terrestres).

Dans le mode de réalisation envisagé ici, cette trajectoire est composée de différents points, chaque point étant défini par un triplet (longitude, latitude, altitude) évalué dans le référentiel terrestre.

La simulation hybride mise en oeuvre par le système d'estimation selon l'invention pour calculer cette trajectoire, se déroule en deux temps et comprend :

- une première partie durant laquelle le mobile tente d'atteindre un premier objectif désigné,
- puis une seconde partie, qui fait suite à la détection d'un événement représentatif d'un dépassement du premier objectif ou d'un changement de ce premier objectif, et durant laquelle le mobile tente d'atteindre un second objectif désigné.

On notera que le premier objectif et le second objectif peuvent être distincts, ou au contraire, le second objectif peut correspondre au premier objectif. Selon cette dernière hypothèse, le mobile tente, durant la seconde partie, de réattaquer le même objectif. Ceci peut se présenter notamment lorsque le mobile a raté son premier objectif.

Le procédé d'estimation selon l'invention est implémenté sous la forme d'une pluralité d'itérations exécutées à l'aide de l'architecture de simulation hybride précitée, mise en oeuvre en temps réel et en boucle fermée. Chacune de ces itérations permet d'obtenir un point de la trajectoire calculée du mobile. La **figure 1** représente de manière schématique, dans un mode particulier de réalisation, un système d'estimation 1 conforme à l'invention et mettant en oeuvre cette architecture de simulation hybride.

Le système d'estimation 1 comporte un simulateur de mouvements angulaires 2, comprenant une table « 3 axes » 21, commandée à l'aide d'un boîtier de commande numérique 22 et adaptée à recevoir un mobile 3 (ou engin volant). Dans l'exemple envisagé ici, le mobile 3 est un missile, dont on cherche à évaluer la capacité à réattaquer un objectif manqué noté O1 (premier objectif au sens de l'invention). Le second objectif au sens de l'invention correspond donc dans cet exemple, au premier objectif. Toutefois, comme décrit précédemment, l'invention s'applique également lorsque le premier et le second objectifs sont distincts.

Le principe de fonctionnement d'une table « 3 axes » est connu de l'homme du métier et ne sera pas décrit plus en détails ici. En variante, le simulateur de mouvements angulaires peut utiliser un autre type de table, tel que par exemple une table « 5 axes ».

Le simulateur de mouvements angulaires 2 peut réaliser des déplacements angulaires autour d'un axe de roulis, d'un axe de tangage et d'un axe de lacet, et ainsi appliquer sur le mobile 3, des mouvements angulaires selon ces trois axes. Ces mouvements angulaires sont appliqués par la table 21, en fonction de commandes cinématiques numériques, reçues du boîtier 22. Ces commandes comprennent notamment une position angulaire, exprimée sous la forme de trois composantes, correspondant respectivement aux trois axes du simulateur de mouvements. Elles peuvent également comprendre une vitesse et une accélération angulaires.

De manière générale dans la suite de la description, par souci de simplification, on se limitera à des commandes cinématiques constituées par une position angulaire seulement. Bien entendu, l'homme du métier saurait transposer le mode de réalisation décrit ici au cas où les commandes cinématiques comprennent également une vitesse et/ou une accélération angulaire.

Le simulateur de mouvements 2 est également adapté à fournir les commandes cinématiques C14 qu'il a réellement exécutées, en réponse aux commandes cinématiques qu'il a reçues. On désignera par $\ell$C14, la composante de lacet de la position angulaire réellement exécutée par le simulateur de mouvements.

Le mobile 3 embarqué sur le simulateur de mouvements est équipé d'un dispositif de guidage terminal 31 et d'une centrale inertielle 32. Le dispositif de guidage terminal 31 est par exemple un autodirecteur.

Le dispositif de guidage terminal 31 est, de façon connue, mis sous tension lorsque le mobile est proche de son objectif. Inversement, sur détection d'un dépassement de l'objectif ou lorsque le mobile est trop éloigné de celui-ci, le dispositif de guidage terminal 31 est mis hors tension (ou de façon équivalente, ses informations ne sont pas prises en compte).

La centrale inertielle 32 comporte des outils de mesure tels que des gyromètres (ou des gyroscopes) et des accéléromètres (non représentés sur la figure), lui permettant de fournir des données inertielles de mesure R (c'est-à-dire des informations gyrométriques et accélérométriques de mesure), en réponse aux mouvements appliqués par le simulateur de mouvements 2.

Le système d'estimation 1 selon l'invention comprend également une cible 4, représentative d'un objectif à atteindre par le mobile (premier ou second objectif en fonction de la partie de la simulation hybride considérée).

Dans l'exemple envisagé ici, cette cible est embarquée sur un chariot, adapté à se déplacer sur une portion de rail circulaire, dans un plan horizontal, en réponse à des commandes cinématiques qui lui sont fournies. Ces commandes cinématiques comprennent notamment une position angulaire, dont une composante dans le plan horizontal (composante de gisement), est définie par rapport au Nord géographique. La cible 4 est en outre adaptée à fournir sa position courante, en réponse à ces commandes (i.e. position exécutée au sens de l'invention). On désignera par $\ell C24$, la composante de gisement de cette position courante.

En variante, d'autres cibles peuvent être utilisées comme, par exemple, des cibles aériennes (ex. table 5 axes), des cibles se déplaçant sur un axe droit, des cibles statiques munies de cornets, etc. Dans ce dernier cas, une position de la cible au sens de l'invention désignera la valeur du barycentre associé aux cornets.

On notera, que du fait de l'hypothèse relative au déplacement de la cible dans un plan horizontal, on s'intéressera essentiellement ici aux composantes de lacet et de gisement des positions angulaires du mobile et de la cible. Toutefois, l'invention peut également s'appliquer lorsque la cible se déplace dans un plan vertical ou selon une direction comprenant une composante de gisement et une composante de site. Dans de tels cas, les opérations détaillées ci-après et appliquées aux composantes de lacet et de gisement des positions angulaires des commandes cinématiques seront également appliquées aux composantes de tangage, pour le mobile, et de site pour la cible.

Le simulateur de mouvements angulaires 2 et la cible 4 sont par ailleurs reliés à au moins un dispositif informatique ou ordinateur 5, utilisé pour mettre en oeuvre les éléments de modélisation numérique de l'architecture de simulation hybride, tels qu'un modèle théorique M1 et un outil de simulation (ou simulateur) M2.

Le modèle théorique M1 est adapté à fournir une image théorique T1 (données inertielles théoriques au sens de l'invention) des données inertielles mesurées par la centrale inertielle 32 embarquée sur le simulateur de mouvements 2 (c'est-à-dire, au point de coordonnées fixes du laboratoire auquel se trouve le simulateur de mouvements 2). Autrement dit, les données inertielles théoriques fournies par le modèle théorique M1 représentent les données inertielles que mesurerait la centrale inertielle 32 au point de coordonnées fixes si elle était parfaite.

Pour calculer l'image théorique T1, le modèle théorique M1 s'appuie sur des modèles mathématiques des phénomènes physiques s'exerçant sur le mobile 3, et plus particulièrement sur la centrale inertielle 32 (expressions théoriques modélisant les effets terrestres tels que la rotation terrestre ou la pesanteur locale), ainsi que des effets liés aux mouvements angulaires exécutés par le simulateur de mouvements 2. Il utilise notamment des commandes cinématiques traduisant les positions, vitesses et accélérations angulaires réellement appliquées au mobile 3 par le simulateur de mouvements 2.

L'outil de simulation M2 modélise le mobile 3 dans un environnement réel de navigation, c'est-à-dire dans un environnement de navigation autour du globe terrestre, prenant en compte les effets terrestres locaux sur le mobile 3 (ex. pesanteur locale, vitesse de rotation terrestre), et les objectifs à atteindre par le mobile. Un tel outil de simulation s'appuie, de façon connue, sur des modèles mathématiques des éléments constituant le mobile (comme notamment un modèle de centrale inertielle présentant des caractéristiques au nominal (milieu de tolérance) du cahier des charges de la centrale inertielle 32), un modèle de mécanique du vol et de son environnement, etc.

Dans l'exemple décrit ici, durant la simulation hybride, l'outil de simulation M2 calcule, à partir de commandes de pilotage P :

- un point X de trajectoire du mobile dans l'environnement réel de navigation,
- des données inertielles de simulation T2, représentatives des données inertielles que serait censée fournir la centrale inertielle 32 dans un tel environnement, pour ce point de trajectoire, et
- des commandes cinématiques C11 et C21 destinées respectivement au simulateur de mouvements 2 et à la cible 4, et représentant les mouvements à appliquer sur le mobile 3 et sur la cible 4 correspondant à ce point de trajectoire.

Le modèle théorique M1 et l'outil de simulation M2 se présentent sous la forme de logiciels mémorisés, par exemple, dans une mémoire morte ou dans une mémoire persistante de l'ordinateur 5 (non représentée).

Le mobile 3 comporte en outre un calculateur de bord 33, relié d'une part à la centrale inertielle 32 et d'autre part à l'ordinateur 5. Le calculateur de bord 33 est en charge notamment du pilotage et du guidage du mobile 3, à partir de données inertielles I. Il est doté d'un module « pilote » 33b, destiné à élaborer des ordres de braquage (ou commandes de pilotage) des organes de pilotage du mobile, compatibles avec les caractéristiques du mobile (ex. ordres de braquage des gouvernes aérodynamiques, commande d'ouverture de vannes de régulation de débit carburant, etc.). Le module pilote 33b est une fonction automatique, jugeant en temps réel, grâce aux données inertielles I, de l'accomplissement de l'ordre commandé précédemment et adaptant au besoin le niveau de l'ordre de commande à venir, en fonction d'une trajectoire de consigne.

De façon générale, un calculateur de bord d'un mobile génère des commandes de pilotage P notamment à partir de données inertielles issues des gyromètres et des accéléromètres de la centrale inertielle du mobile. Dans le système de validation 1 selon l'invention, les données inertielles I utilisées par le calculateur de bord 33 dépendent :

- des données inertielles de mesure R,
- des données inertielles de simulation T2, et
- des données inertielles théoriques T1 .

Plus précisément, dans l'exemple envisagé ici, le calculateur de bord 33 évalue les commandes de pilotage P à partir des données inertielles I vérifiant :

$$I = R + T2 - T1.$$

Un tel calcul est connu du document EP 1 909 067 et du document FR 08 50793, publié sous le N° 2 927 418, et ne sera en conséquence pas décrit plus en détails ici.

On notera que les différentes liaisons entre l'ordinateur 5, le simulateur de mouvements 2, la cible 4, le calculateur 33 de bord et la centrale inertielle 32 peuvent être réalisées via des câbles électriques ou optiques, par radio ou par d'autres moyens.

Nous allons maintenant décrire, en référence à la **figure 2**, les principales étapes mises en oeuvre à chaque itération de la première partie du procédé d'estimation selon l'invention par le système de validation 1, pour évaluer un point de la trajectoire du mobile 3. Pour rappel, durant cette première partie, le mobile 3 tente d'atteindre le premier objectif O1 qu'on lui a préalablement désigné.

La position de ce premier objectif est par exemple stockée dans une mémoire du mobile 3, ou le mobile 3 peut la recevoir par l'intermédiaire d'une liaison de données établie avec un satellite, un hélicoptère, un avion, etc. Elle correspond à une position exprimée dans le référentiel terrestre, ou en variante, à une position relative par rapport à un élément connu du mobile, tel que son point de tir.

Comme décrit précédemment, chaque itération i du procédé d'estimation selon l'invention est implémentée par les différentes entités du système de validation 1 en temps réel, et à un rythme d'horloge conditionné par le rythme d'horloge du mobile. Plus précisément, à chaque itération, les calculs et les échanges de données entre le calculateur de bord 33 du mobile, le simulateur M2, le modèle théorique M1, le simulateur de mouvements angulaires 2, la centrale inertielle 32 et la cible 4 sont effectués à la fréquence réelle cadençant les opérations réalisées par le mobile et avantageusement dans un délai inférieur à la période correspondant à cette fréquence.

De façon générale, dans la suite de la description, on qualifiera de « courantes », les données de l'itération en cours (ex. commandes cinématiques fournies par l'outil de simulation, appliquées ou exécutées, informations inertielles, etc.).

Au cours d'une itération i, sur réception de commandes de pilotage P générées par le calculateur de bord 33 à partir de données inertielles I à l'itération i-1 (étape E10), l'outil de simulation numérique M2 génère un point X de la trajectoire du mobile dans l'environnement réel de navigation (étape E20).

A cette fin, l'outil M2 utilise notamment un modèle de mécanique du vol qui lui permet de calculer, en réponse aux commandes de pilotage P et dans l'environnement réel de navigation, la position réelle du mobile (i.e. point de la trajectoire), à savoir sa longitude, sa latitude et son altitude. Ce point de trajectoire X vient incrémenter la trajectoire du mobile élaborée par le procédé d'estimation selon l'invention (étape E30).

L'outil de simulation M2 fournit également, en temps réel :

- les données inertielles de simulation T2 représentatives des données inertielles censées être mesurées par la centrale inertielle 32, pour le nouveau point X de trajectoire calculé, dans l'environnement réel de navigation ;
- des commandes cinématiques C11, indiquant le mouvement à exécuter par le simulateur de mouvements 2 en réponse aux commandes de pilotage P (i.e. mouvement accompli par le mobile pour atteindre le nouveau point de trajectoire X). On désignera par $\ell$C11 la composante de lacet de la position angulaire comprise dans C11, et définie par rapport au nord géographique ; et
- des commandes cinématiques numériques C21, indiquant la position à prendre par l'axe mobile 3 - cible 4. On désignera par $\ell$C21 la composante de gisement de la position angulaire comprise dans C21.

Dans l'exemple envisagé ici, l'outil de simulation M2 fournit également une estimation d de la distance entre le mobile et le premier objectif. Cette estimation permet notamment à une unité logique 51 d'évaluer la position du mobile par rapport au premier objectif, et d'activer une transition T (T=1), lorsqu'elle détecte que le mobile a dépassé le premier objectif (étape E40). Sinon, par défaut, la transition est désactivée (T=0). Autrement dit, la transition T est activée durant la seconde partie de la simulation hybride et elle est désactivée durant la première partie.

Dans l'exemple envisagé ici, la seconde partie de la simulation hybride coïncide avec la désignation du second objectif, autrement dit de l'objectif final à atteindre par le mobile. Toutefois, bien entendu, on pourrait envisager entre le premier objectif et cet objectif « final », la désignation d'un ou de plusieurs objectifs intermédiaires, auquel cas la seconde partie de la simulation, et plus précisément l'activation de la transition T, n'interviendrait qu'à compter de la désignation de l'objectif final.

L'unité logique 51 est par exemple une fonction d'un programme informatique ou un logiciel mémorisé dans la mémoire morte de l'ordinateur 5. Son fonctionnement sera décrit plus en détails ultérieurement, en référence aux figures 3A et 3B.

Dans le mode de réalisation envisagé ici, durant la première partie de la simulation, avant leur fourniture respectivement au simulateur de mouvements 2 et à la cible 4, les commandes cinématiques C11 et C21 sont transmises à une unité logique 52 (étape E50). L'unité logique 52 est par exemple une fonction d'un programme informatique ou un logiciel mémorisé dans la mémoire morte de l'ordinateur 5. Cette unité logique 52 est adaptée à élaborer des commandes cinématiques C21 et C22 à partir des commandes cinématiques C11 et C21 issues de l'outil de simulation.

Pour ce faire, elle applique un terme correctif D1 non nul aux composantes $\ell C11$ et $\ell C21$ des commandes cinématiques C11 et C21, si la trajectoire du mobile pour atteindre le premier objectif est jugée incompatible avec les capacités angulaires (débattement) du simulateur de mouvements 2 et de la cible 4. Dans le cas contraire, D1 sera pris nul ici, afin de simplifier l'architecture du simulateur hybride.

On notera que le terme correctif D1 n'est appliqué par l'unité logique 52 que pendant la première partie de la simulation hybride c'est-à-dire lorsque le mobile tente d'atteindre le premier objectif (autrement dit lorsque la transition T est désactivée, i.e. T=0).

Pour déterminer si la trajectoire du mobile pour atteindre le premier objectif est incompatible avec les capacités angulaires du simulateur de mouvements 2, on peut, avant de réaliser la simulation hybride avec les éléments réels, effectuer une simulation numérique, par exemple à l'aide du modèle M2 (comprenant alors un modèle de calculateur de bord), ou en variante une simulation sans simulateur de mouvements, et ce afin d'estimer de façon préliminaire la trajectoire du mobile. Si la trajectoire préliminaire ainsi obtenue s'avère incompatible avec les capacités du simulateur de mouvements 2 et de la cible 4, le terme correctif D1 à appliquer est calculé à partir de la trajectoire préliminaire, des capacités angulaires du simulateur de mouvements 2 et de la cible 4 (on suppose celles-ci connues des constructeurs du simulateur de mouvements et de la cible), et du positionnement angulaire relatif entre le simulateur de mouvements et la cible.

Plus précisément, le terme correctif D1 est choisi de sorte à garantir que la composante de gisement de la position angulaire de la cible est incluse dans la plage de débattement angulaire offerte par la cible et que la composante de lacet de la position angulaire du simulateur de mouvements est compatible avec le débattement angulaire offert par le simulateur de mouvements. Une fois ces deux exigences satisfaites, on pourra encore affiner le choix de D1 afin d'utiliser au mieux la plage de débattement angulaire offerte par le simulateur de mouvements.

Par exemple, si le simulateur de mouvements 2 a une capacité angulaire de +/- 100° par rapport au nord géographique, que la cible à une capacité angulaire de +/- 40° par rapport au nord géographique, et que la trajectoire préliminaire du mobile indique un déroulement face au sud, c'est-à-dire selon un angle de 180° par rapport au nord géographique, un terme correctif D1 égal à -180° pourra être considéré. Les commandes cinématiques obtenues après application du terme correctif D1 seront alors compatibles avec le débattement angulaire du simulateur de mouvements et de la cible.

Ainsi, l'unité logique 52 applique sur les composantes de lacet $\ell C11$ et de gisement $\ell C21$ le terme correctif D1. Plus précisément, le terme correctif D1 est ajouté par l'unité logique 52 aux composantes de lacet $\ell C11$ et de gisement $\ell C21$ pour générer respectivement les composantes de lacet $\ell C12$ et de gisement $\ell C22$ (étape E60) :

$$\ell C12 = \ell C11 + D1 \text{ et } \ell C22 = \ell C21 + D1.$$

Les autres composantes demeurent inchangées.

Les commandes cinématiques C12 et C22 ainsi obtenues sont alors transmises par l'unité logique 52 au simulateur de mouvements 2 et à la cible 4 (transition T=0 représentée sur la figure 1).

Les commandes cinématiques C22 sont appliquées à la cible 4 qui fournit, en réponse, sa position courante C24 (position exécutée ou réellement exécutée au sens de l'invention) (étape E70).

De même, les commandes cinématiques C12 sont reçues par le boîtier numérique 22 du simulateur de mouvements 2 et appliquées par la table 3 axes 21 sur le mobile 3 (étape E80).

En réponse au mouvement appliqué par le simulateur de mouvements 2, la centrale inertielle 32 fournit des données inertielles de mesure R (étape E82), issues des gyromètres et des accéléromètres de la centrale inertielle 32.

Par ailleurs, simultanément, les commandes cinématiques C14 réellement exécutées par le simulateur de mouvements 2 sur le mobile 3 sont transmises à l'ordinateur 5 (étape E84), en vue d'être fournies au modèle théorique M1. Ces commandes cinématiques C14 ont été mesurées par des capteurs angulaires localisés sur le simulateur de mouvements.

Le modèle théorique M1 évalue, à partir des commandes C14, les données inertielles théoriques T1 (étape E86).

Comme décrit précédemment, pour générer les données inertielles théoriques T1, le modèle théorique M1 comporte un modèle mathématique modélisant les phénomènes physiques s'exerçant sur une centrale inertielle parfaite localisée en un point de coordonnées fixes correspondant au laboratoire. Ce modèle M1 est identique aux modèles décrits dans les documents EP 1 909 067 et FR 08 50793 (non publié à ce jour).

On notera que les données inertielles théoriques T1 sont censées être représentatives des données inertielles mesurées par la centrale inertielle 32 du mobile 3 embarqué sur le simulateur de mouvements 2, c'est-à-dire des données inertielles mesurées en un point de coordonnées fixes du laboratoire. Les données inertielles théoriques T1 et les données inertielles de mesure R fournies par la centrale inertielle sont donc identiques, à l'écart près dû aux caractéristiques propres de la centrale inertielle réelle (i.e., non nominale).

Les données inertielles de mesure R (fournies par la centrale inertielle 32), les données inertielles théoriques T1 (fournies par le modèle théorique M1) et les données inertielles de simulation T2 (fournies par le simulateur M2) générées à l'itération i sont ensuite utilisées pour évaluer les données inertielles I (étape E90) selon :

$$I = R + T2 - T1.$$

Pour cela, on utilise des moyens d'opérations arithmétiques 54 et 33a, connus de l'homme du métier, et localisés respectivement dans l'ordinateur 5 et dans le calculateur de bord 33, comme représenté sur la figure 1. Ainsi, les moyens d'opérations arithmétiques 54 évaluent dans un premier temps la différence T2-T1, puis les moyens d'opérations arithmétiques 33a ajoutent dans un second temps le résultat de cette différence aux données inertielles R.

En variante, les moyens 54 et 33a peuvent être colocalisés dans l'ordinateur 5 ou dans le calculateur de bord 33 ou dans un autre dispositif (ex. la centrale inertielle ou un autre ordinateur). Par ailleurs, d'autres opérations menant au calcul de I peuvent être effectuées.

Les commandes de pilotage P sont ensuite calculées par le calculateur de bord 33 en fonction de ces données inertielles I et à partir de la trajectoire de consigne du mobile comme décrit précédemment (étape E100).

Les commandes de pilotage P sont alors fournies à l'outil de simulation M2 au cours de l'itération i+1, puis les étapes E10 à E100 sont reprises à chaque itération de la première partie, de sorte à élaborer la trajectoire du mobile.

Nous allons maintenant décrire plus en détails le traitement réalisé par l'unité logique 51. Comme mentionné précédemment, à chaque itération, cette unité examine la distance d entre le mobile et le premier objectif pour déterminer la position du mobile par rapport au premier objectif, et active la transition T à 1, si le mobile a dépassé le premier objectif.

De façon plus précise, à chaque itération, l'unité 51 met en oeuvre les étapes suivantes :

- si d $\leq$ dmin : dmin = d et cpt = 0,
  sinon cpt=cpt+1 ; et
- si cpt > S1, alors la transition T est activée (i.e. T=1).

S1, cpt et dmin désignent respectivement un seuil prédéterminé (choisi de sorte à pouvoir détecter sans ambiguïté le dépassement du premier objectif), un compteur et une distance minimale initialisée à une valeur supérieure à la distance maximale pouvant être considérée entre le mobile et le premier objectif.

Ainsi, la transition T est activée lorsque la distance minimale dmin est dépassée depuis plusieurs itérations (au moins S1), autrement dit lorsque le mobile se déplace au-delà du premier objectif. L'activation de la transition T par l'unité 51 constitue ainsi une détection d'un événement représentatif d'un dépassement du premier objectif par le mobile au sens de l'invention.

Bien entendu, si l'on s'intéresse à la trajectoire du mobile en cas de changement d'objectif en cours de mission, l'unité logique 51 pourra être adaptée de façon à activer la transition T sur détection de la désignation d'un nouvel objectif (que ce changement d'objectif soit réalisé avant ou après dépassement du premier objectif).

L'activation de la transition T par l'unité logique 51 marque le début de la seconde partie de la simulation hybride. Nous allons maintenant décrire, en référence aux **figures 3A et 3B,** les principales étapes mises en oeuvre au cours de cette seconde partie, c'est-à-dire lorsque le mobile tente d'atteindre le second objectif, autrement dit ici, lorsqu'il tente de réattaquer l'objectif O1

Les itérations de la seconde partie se déroulent pour l'essentiel de façon similaire à la première partie (étapes E10-E40 et E82-E100). Toutefois, les commandes cinématiques C11 et C21 issues de l'outil de simulation M2 sont maintenant traitées par une unité logique 53 (transition T=1 représentée sur la figure 1) avant leur fourniture, respectivement au simulateur de mouvements 2 (en vue d'être appliquées sur le mobile 3) et à la cible 4. On désignera par C13 et C23 respectivement les commandes cinématiques (positions angulaires ici) fournies par l'unité logique 53 au simulateur de mouvements 2 et à la cible 4, et par ℓC13 et ℓC23 les composantes de lacet et de gisement des positions angulaires comprises dans C13 et C23.

Conformément à l'invention, suite à l'activation de la transition T par l'unité logique 51, deux phases sont mises en oeuvre par le système d'estimation 1 selon l'invention :

- une première phase φ1 dite de positionnement (représentée sur la figure 3A), au cours de laquelle des commandes cinématiques dites de transition sont fournies au simulateur de mouvements 2 et à la cible 4, en remplacement des commandes cinématiques C11 et C21, en vue de positionner le mobile 3 dans une direction proche de celle de la cible 4 pour la réattaque de l'objectif ; et
- une seconde phase φ2 dite de pilotage (représentée sur la figure 3B), au cours de laquelle l'unité logique 53 applique des termes correctifs sur les commandes cinématiques C11 et C21 envoyées par l'outil de simulation au simulateur de mouvements 2 et à la cible 4, en vue d'estimer la trajectoire du mobile 3 lors de sa réattaque de l'objectif.

Ainsi, sur activation de la transition T par l'unité logique 51 (étape F10), la phase φ1 de positionnement du mobile 3 et de la cible 4 est déclenchée. On notera, dans la suite de la description, i0, l'itération à laquelle la transition T est activée.

Les valeurs courantes des commandes cinématiques C11 et C21, et des commandes cinématiques exécutées C14 et C24 prises au moment de l'activation de la transition T, sont alors mémorisées par l'unité logique 53 (étape F20). On désignera respectivement par C11(i0), C21(i0), C14(i0) et C24(i0) ces commandes, et par ℓC11(i0), ℓC21(i0), ℓC14(i0) et ℓC24(i0), les composantes de lacet et de gisement des positions angulaires associées à ces commandes.

Comme décrit précédemment, la phase de positionnement φ1 a pour but de positionner le mobile 3 et la cible 4 dans des positions de consigne prédéterminées P1 et P2, de sorte à pouvoir observer la phase finale d'attaque de l'objectif O1 par le mobile, notamment lors de la remise en route fonctionnelle du dispositif de guidage terminal 31. Les positions de consigne P1 et P2 sont choisies ici de sorte à obtenir une direction du mobile 3 et une direction de la cible 4 après positionnement angulairement proches, par exemple inférieure à 30°. Toutefois, cet exemple n'est donné qu'à titre illustratif, et préférentiellement, on choisira les positions de consigne P1 et P2 de sorte à garantir une latence entre le moment où les positions de consigne sont atteintes et le redémarrage des senseurs du mobile, et notamment de son dispositif de guidage terminal.

En outre, pour des raisons d'implémentation, les positions de consigne P1 et P2 dépendent ici de la position du mobile 3 par rapport à l'objectif O1 et plus précisément, du changement de direction éventuellement opéré par le mobile 3 pour venir se positionner dans la direction de la cible 4.

Dans l'exemple envisagé ici, le second objectif correspond au premier objectif. Après dépassement du premier objectif par le mobile, celui-ci doit donc changer de direction pour pouvoir réattaquer le premier objectif. Ainsi, l'unité logique 53 détermine, dans un premier temps, le sens de rotation adopté par le mobile pour se replacer dans la direction de l'objectif O1 (étape F30).

Pour ce faire, elle compare, par rapport à un seuil S2 prédéterminé et si besoin sur une pluralité d'itérations, la valeur absolue de la différence entre la composante de lacet courante ℓC11 de l'itération en cours et la composante de lacet ℓC11(i0) (notée $|ℓC11- ℓC11(i0)|$). Ce test est réalisé tant que cette valeur absolue n'est pas supérieure au seuil S2 :

- Si $|ℓC11- ℓC11(i0)|$ est supérieur à S2 et ($ℓC11- ℓC11(i0)$) est positif, alors l'unité logique 53 détermine que le mobile 3 effectue un changement de direction dans le sens horaire.
- Si $|ℓC11- ℓC11(i0)|$ est supérieur à S2 et ($ℓC11- ℓC11(i0)$) est négatif, l'unité logique 53 détermine que le mobile 3 effectue un changement de direction dans le sens antihoraire.

Le seuil S2 sera choisi de façon à permettre de déterminer sans ambiguïté le sens de rotation du mobile (de l'ordre de quelques degrés).

Durant cette étape de détermination du sens de rotation adopté par le mobile, l'unité logique 53 fournit au simulateur de mouvements et à la cible des commandes cinématiques de transition C13 et C23 constantes, prises ici égales respectivement à C14(i0) et C24(i0). Autrement dit, durant cette étape de détermination, l'unité logique 53 bloque notamment les composantes de lacet du simulateur de mouvements et de gisement de la cible depuis l'instant de transition de T=0 à T=1, et tant que le sens de rotation du mobile n'a pas été déterminé. On notera que du fait du mode de calcul utilisé pour évaluer les informations inertielles I, le blocage n'a pas d'impact sur la validité des commandes de pilotage ni sur la trajectoire. En effet, les données inertielles de mesure R et les données inertielles théoriques T1 dépendant toutes deux de la cinématique réellement exécutée par le simulateur de mouvements, un blocage de l'axe de lacet du simulateur de mouvements a des répercutions identiques sur R et sur T1, et se compense donc dans le calcul des informations inertielles I.

En outre dans l'exemple envisagé ici, l'ensemble des composantes des commandes cinématiques sont bloquées et prises égales aux composantes correspondantes de C14(i0) et C24(i0). En variante, seules les composantes de lacet et de gisement sont bloquées respectivement aux valeurs de $\ell$C14(i0) et $\ell$C21(i0), tandis que les autres composantes sont prises égales aux composantes correspondantes des commandes courantes C11 et C21 ou à des valeurs arbitraires.

Dans l'hypothèse où les commandes cinématiques comprendraient également une vitesse et une accélération angulaires, le fait que les positions angulaires soient constantes implique bien entendu que les composantes des vitesse et accélération angulaires soient nulles.

Suite à la détermination du sens de rotation du mobile 3, l'unité logique 53 positionne le simulateur de mouvements et la cible dans les positions de consigne prédéterminées P1 et P2 choisies en fonction du sens de rotation du mobile, à l'aide des commandes de transition C13 et C23.

Ainsi, si le sens de rotation est le sens horaire, l'axe de lacet du simulateur de mouvements 2 sera positionné sur la gauche à la consigne P1 (choisie négative), et l'axe de gisement de la cible 4 sur la droite à la consigne P2 (choisie positive), de façon à ce que la fin du mouvement réel du mobile puisse être effectué avec l'ensemble table 3 axes - cible.

Inversement, si le sens de rotation est le sens antihoraire, l'axe de lacet du simulateur de mouvements 2 sera positionné sur la droite à la consigne P1 (choisie positive), et l'axe de gisement de la cible 4 sur la gauche à la consigne P2 (choisie négative).

Dans ces exemples, on a choisi P1 et P2 de signes opposés, vérifiant un écart angulaire prédéterminé, de sorte à gérer avantageusement les limites en termes de débattement angulaire de la cible et du simulateur de mouvements. Toutefois, P1 et P2 peuvent être de signes quelconques.

On notera en outre, que les positions « zéro » de la cible et du simulateur de mouvements peuvent ne pas être confondues. Toutefois, la prise en compte de la différence angulaire existant entre les positions « zéro » de la cible et du simulateur de mouvements ne poserait pas de difficulté à l'homme du métier, qui saurait de ce fait adapter les calculs et opérations présentés ici.

Le positionnement du mobile et de la cible aux positions de consigne est réalisé, au fil des itérations, de la façon suivante :

- Pour le mobile, $\ell$C14 désignant, durant la phase de positionnement, la position réellement exécutée par le mobile en réponse aux commandes cinématiques de transition courantes pour l'itération considérée :

  o si $\ell$C14-P1 > 0 (étape F40) : l'axe de lacet de la table est déplacé à chaque itération dans le sens antihoraire (étape F42), autrement dit, la composante de lacet de la commande cinématique de transition C13 fournie par l'unité logique 53 au simulateur de mouvements est prise égale à :

$$\ell C13 = \ell C14 - \varepsilon 1,$$

  $\varepsilon 1$ désignant un entier positif de petite valeur ;
  o si $\ell$C14-P1 < 0 (étape F40) : l'axe de lacet de la table est déplacé à chaque itération dans le sens horaire (étape F44), autrement dit, la composante de lacet de la commande cinématique de transition C13 fournie par l'unité logique 53 au simulateur de mouvements est prise égale à :

$$\ell C13 = \ell C14 + \varepsilon 1.$$

  Les autres composantes de positions angulaires de la commande cinématique de transition C13 sont prises ici égales aux composantes correspondantes de la commande cinématique courante C11 issue de l'outil de simulation. Le positionnement est effectif lorsque l'on a détecté que $\ell$C14 est à la consigne P1, à un seuil S3 près pris préférentiellement proche de 0 (étape F46). Ainsi, dès que l'on détecte que la position exécutée par le mobile est sensiblement égale à la position de consigne P1 (c'est-à-dire égale à P1 au seuil S3 près), un marqueur f1 (premier marqueur au sens de l'invention) est activé (f1=1) (étape F48). On désignera par i1, l'itération à laquelle la position P1 est atteinte et le marqueur f1 est activé. Les valeurs $\ell$C13(i1) et $\ell$C14(i1) sont alors mémorisées.

- Pour la cible, $\ell$C24 désignant, durant la phase de positionnement, la position exécutée par la cible en réponse aux commandes cinématiques de transition courantes pour l'itération considérée :

  o si $\ell$C24-P2 > 0 (étape F50) : l'axe de gisement de la cible est déplacé à chaque itération dans le sens antihoraire (étape F52), autrement dit, la composante de gisement de la commande cinématique de transition C23 fournie par l'unité logique 53 à la cible est prise égale à :

$$\ell C23 = \ell C24 - \varepsilon 2,$$

$\varepsilon 2$ désignant un nombre réel positif de petite valeur ;

o si $\ell C24 - P2 < 0$ (étape F50) : l'axe de gisement de la cible est déplacé à chaque itération dans le sens horaire (étape F54), autrement dit, la composante de gisement de la commande cinématique C23 de transition fournie par l'unité logique 53 à la cible est prise égale à :

$$\ell C23 = \ell C24 + \varepsilon 2.$$

Les autres composantes de positions angulaires de la commande cinématique de transition C23 sont prises ici égales aux composantes de la commande cinématique courante C21 issue de l'outil de simulation. Le positionnement est effectif lorsque l'on a détecté que $\ell C24$ est à la consigne P2, à un seuil S4 près pris préférentiellement proche de 0 (étape F56). Ainsi, dès que l'on détecte que la position exécutée par la cible est sensiblement égale à la position de consigne P2 (c'est-à-dire égale à P2 au seuil S4 près), un marqueur f2 (second marqueur au sens de l'invention) est activé (f2=1) (étape F58). On désignera par i2 l'itération à laquelle la position P2 est atteinte et le marqueur f2 est activé. Les valeurs $\ell C23(i2)$ et $\ell C24(i2)$ sont alors mémorisées.

On notera que les marqueurs f1 et f2 ne sont pas nécessairement activés à la même itération (i.e. i1 et i2 peuvent être distinctes). En outre, les positionnements du mobile et de la cible peuvent être réalisés simultanément ou en variante successivement.

Dés que l'unité logique 53 détecte que les deux marqueurs f1 et f2 sont activés, la valeur absolue de la différence entre la composante de lacet $\ell C11$ courante et la composante de gisement courante $\ell C21$ est évaluée et comparée à un seuil déterminé à partir de la valeur absolue de la différence entre les positions $\ell C14(i1)$ et $\ell C24(i2)$ (étape F60). Cette valeur absolue de la différence entre la composante de lacet $\ell C11$ courante et la composante de gisement courante $\ell C21$ constitue une différence entre la commande cinématique courante fournie au simulateur de mouvements et la commande cinématique courante fournie à la cible par l'outil de simulation au sens de l'invention.

On s'assure ainsi lors de cette comparaison, que l'écart entre les positions angulaires courantes du simulateur de mouvements et de la cible dans le plan horizontal, qui est défini ici par la valeur absolue de la différence entre la composante de lacet courante $\ell C11$ et la composante de gisement courante $\ell C21$, est inférieure à un seuil déterminé. Si tel est le cas, une phase dite de pilotage, décrite ultérieurement, est alors déclenchée.

Ainsi, plus précisément, conformément aux hypothèses décrites précédemment pour P1 et P2 :

- Si le sens de rotation du mobile déterminé à l'étape F30 est horaire : tant que la condition (1) donnée par ($\ell C21 - \ell C11$)>($\ell C24(i2) - \ell C14(i1)$) est vérifiée (étape F60), l'unité logique 53 envoie au simulateur de mouvements et à la cible des commandes $\ell C13$ et $\ell C23$ constantes, égales aux dernières valeurs fournies respectivement au simulateur de mouvements et à la cible ayant permis d'atteindre les positions de consigne P1 et P2 (étape F70). Autrement dit, l'unité logique 53 envoie au simulateur de mouvements et à la cible des commandes figées, égales respectivement aux valeurs $\ell C13(i1)$ et $\ell C23(i2)$.

- Si le sens de rotation du mobile déterminé à l'étape F30 est antihoraire : tant que la condition (2) donnée par ($\ell C11 - \ell C21$)>($\ell C14(il) - \ell C24(i2)$) est vérifiée (étape F60), l'unité logique 53 envoie au simulateur de mouvements et à la cible des commandes $\ell C13$ et $\ell C23$ constantes, égales aux dernières valeurs fournies respectivement au simulateur de mouvements et à la cible ayant permis d'atteindre les positions de consigne P1 et P2 (étape F70). Autrement dit, l'unité logique 53 envoie au simulateur de mouvements et à la cible des commandes figées, égales respectivement aux valeurs $\ell Cl13(il)$ et $\ell C23(i2)$.

Dans une variante de réalisation, la valeur absolue de la différence entre les composantes de lacet $\ell C11$ et de gisement $\ell C21$ courantes est comparée à la valeur absolue de la différence entre les positions P1 et P2 (seuil déterminé au sens de l'invention), selon une approche similaire à celle décrite précédemment pour les positions $\ell Cl4(i1)$ et $\ell C24(i2)$.

Lorsque l'unité logique 53 détecte que la condition (1) ou la condition (2), selon le sens de rotation du mobile, n'est plus vérifiée, un marqueur f3 est activé et une phase dite de pilotage $\varphi 2$ est déclenchée (étape F80). On désignera par i3, l'itération à laquelle la phase de pilotage est déclenchée.

On notera que les marqueurs f1 et f2 doivent être préférentiellement activés avant que la condition (1) ou (2), selon le sens de rotation du mobile, ne soit plus vérifiée, autrement dit il est préférable qu'il y a un délai suffisant (même si un délai proche de zéro suffit) entre l'instant où les marqueurs f1 et f2 sont activés et l'instant où le marqueur f3 est activé. A cette fin, on pourra choisir des positions de consigne P1 et P2 permettant de remplir cette condition, ou en variante des valeurs de $\varepsilon 1$ et/ou de $\varepsilon 2$ appropriées (on notera que plus ces valeurs sont grandes et plus la vitesse de ralliement des consignes P1 et P2 sera importante).

Au cours de la phase de pilotage $\varphi 2$, l'unité logique 53 applique sur les commandes cinématiques C11 et C21 fournies au mobile et à la cible, des termes correctifs D2 et D3 liés aux positions de consigne P1 et P2. Ceci permet de simuler, à l'aide du système d'estimation 1, tout type de déplacement du mobile et de la cible, les termes D2 et D3 rendant ces déplacements compatibles avec les débattements angulaires du simulateur de mouvements et de la cible.

Pour évaluer ces termes correctifs, l'unité logique 53 mémorise, les composantes de lacet $\ell C11(i3)$ et de gisement $\ell C21(i3)$ courantes à l'itération i3 (étape F90).

Elle évalue ensuite les termes correctifs D2 et D3 selon les équations suivantes :

$$D2 = \ell C14(i1)\text{-}\ell C11(i3) \quad et \quad D3 = \ell C24(i2)\text{-}\ell C21(i3).$$

En variante, les termes correctifs D2 et D3 peuvent être évalués selon les équations suivantes :

$$D2 = P1\text{-}\ell C11(i3) \quad et \quad D3 = P2\text{-}\ell C21(i3).$$

Ainsi à chaque itération de la phase de pilotage, jusqu'à la fin de la seconde partie, l'unité logique 53 applique sur les composantes de lacet $\ell C11$ et de gisement $\ell C21$, les décalages angulaires D2 et D3 respectivement, selon les équations suivantes (étape F100) :

$$\ell C13 = \ell C11\text{+}D2,$$

et

$$\ell C23= \ell C21\text{+}D3.$$

Les autres composantes de la commande cinématique C13, respectivement de la commande cinématique C23, sont prises ici égales aux composantes correspondantes de la commande cinématique courante C11, respectivement de la commande cinématique courante C21, issue de l'outil de simulation.

Les commandes cinématiques C13 et C23 ainsi modifiées par l'unité logique 53 sont ensuite fournies respectivement au simulateur de mouvements et à la cible pour application. En réponse à ces commandes cinématiques, la cible délivre sa position courante.

A l'issue de la seconde partie de la simulation hybride, marquée par la détection d'un événement de fin de simulation (étape F110), comme par exemple l'atteinte ou le dépassement du second objectif, la trajectoire du mobile obtenue par le système d'estimation 1 est examinée.

Notamment, on détermine si le second objectif est atteint, par exemple à l'aide de l'unité logique 51 et de la distance d (étape F120).

Si tel est le cas, alors on détermine que le mobile 3 est adapté à réattaquer son objectif une fois dépassé (étape F130). Sinon le mobile est invalidé car jugé non capable de réattaquer un objectif après manquement de celui-ci (étape F140).

**Revendications**

1. Procédé d'estimation d'une trajectoire d'un mobile (3) dans un environnement réel de navigation comprenant, la fourniture (E20), par un outil de simulation numérique (M2) modélisant le mobile dans cet environnement, de commandes cinématiques (C11,C12) à un simulateur de mouvements (2) embarquant le mobile et à une cible (4) représentative d'un objectif à atteindre par le mobile, ledit outil de simulation étant alimenté (E10) par des commandes de pilotage (P) délivrées par un calculateur (33) dudit mobile et délivrant, en réponse à ces commandes de pilotage, des points (X) de la trajectoire, ledit procédé d'estimation comprenant en outre :

   - sur détection (F10) d'un événement représentatif d'un dépassement ou d'un changement d'un premier objectif désigné pour ce mobile, une phase de positionnement (φ1) associée à un second objectif désigné pour le mobile, comprenant :

- la comparaison (F46) de positions exécutées par le simulateur de mouvements, en réponse à des premières commandes cinématiques de transition, avec une première position de consigne prédéterminée, et l'activation d'un premier marqueur (f1) lorsqu'une position sensiblement égale à la première position de consigne est détectée ;
- la comparaison (F56) de positions exécutées par la cible, en réponse à des secondes commandes cinématiques de transition, avec une seconde position de consigne prédéterminée, et l'activation d'un second marqueur (f2) lorsqu'une position sensiblement égale à la seconde position de consigne est détectée ;

- lorsque les premier et second marqueurs sont activés, une étape d'évaluation d'une différence entre la commande cinématique courante fournie au simulateur de mouvements et la commande cinématique courante fournie à la cible par l'outil de simulation numérique ; et
- si cette différence est inférieure à un seuil déterminé (F60), une phase de pilotage (φ2) comportant l'application (F100) de termes correctifs aux commandes cinématiques issues de l'outil de simulation avant leur fourniture au simulateur de mouvements et à la cible, ces termes correctifs étant liés auxdites positions de consigne.

**2.** Procédé d'estimation selon la revendication 1 dans lequel :

- lesdites commandes cinématiques fournies par l'outil de simulation au simulateur de mouvements comportent une composante de lacet et lesdites commandes cinématiques fournies par l'outil de simulation à la cible comportent une composante de gisement ; et
- tant qu'un événement représentatif d'un dépassement ou d'un changement d'un premier objectif désigné pour ce mobile n'a pas été détecté (F10), on applique (E60) sur les composantes de lacet et sur les composantes de gisement des commandes cinématiques, un terme de compensation angulaire avant leur fourniture respectivement au simulateur de mouvements et à la cible.

**3.** Procédé d'estimation selon la revendication 1 ou 2 dans lequel, lorsqu'un changement de direction du mobile est requis en vue d'atteindre le second objectif par rapport à une direction empruntée par le mobile pour atteindre le premier objectif, la phase de positionnement comprend en outre une étape (F30) de détermination du sens de rotation adopté par ledit mobile pour changer de direction, les première et seconde positions de consigne étant choisies en fonction de ce sens de rotation.

**4.** Procédé d'estimation selon la revendication 3 dans lequel, pendant l'étape de détermination, les commandes cinématiques de transition fournies au simulateur de mouvements et à la cible sont constantes.

**5.** Procédé d'estimation selon la revendication 4 dans lequel, les commandes cinématiques de transition constantes comprennent les positions exécutées par le simulateur de mouvements et par la cible au moment de la détection de l'événement.

**6.** Procédé d'estimation selon l'une quelconque des revendications 3 à 5 dans lequel le seuil dépend des positions exécutées respectivement par le simulateur de mouvements et par la cible lors de l'activation respectivement du premier et du second marqueur, et du sens de rotation adopté par le mobile pour changer de direction.

**7.** Procédé d'estimation selon l'une quelconque des revendications 1 à 6 dans lequel la phase de pilotage comprend en outre une étape d'évaluation (F90) des termes correctifs à partir :

- des positions exécutées par le simulateur de mouvements et par la cible respectivement au moment de l'activation du premier et du second marqueurs ; et
- des commandes cinématiques fournies par l'outil de simulation au moment où l'on détecte que la différence est inférieure au seuil déterminé.

**8.** Procédé d'estimation selon l'une quelconque des revendications 1 à 7 dans lequel, les commandes de pilotage sont évaluées (E100) par le calculateur du mobile à partir :

- de données inertielles de mesure (R) fournies par une centrale inertielle (31) du mobile embarqué sur le simulateur de mouvements ;

- de données inertielles de simulation (T2) représentatives de données inertielles censées être fournies par la centrale inertielle dans l'environnement réel de navigation ; et
- de données inertielles théoriques (T1) représentatives des données inertielles de mesure fournies par la centrale inertielle, ces données inertielles théoriques étant évaluées à partir de commandes cinématiques exécutées par le simulateur de mouvements.

9. Procédé d'estimation selon la revendication 8 dans lequel les commandes de pilotage sont calculées en fonction de données inertielles I définies par I=T2+R-T1 où T2, R et T1 désignent respectivement les données inertielles de simulation, les données inertielles de mesure et les données inertielles théoriques.

10. Procédé d'estimation selon l'une quelconque des revendications 1 à 9 dans lequel le second objectif correspond au premier objectif.

11. Procédé d'estimation selon l'une quelconque des revendications 1 à 10 comprenant en outre une étape de vérification (F120) que le second objectif est atteint par le mobile.

12. Système de simulation hybride (1) permettant l'estimation d'une trajectoire d'un mobile (3) dans un environnement réel de navigation, ledit système comprenant :

- un simulateur de mouvements (2) embarquant le mobile ;
- une cible (4) représentative d'un objectif à atteindre par le mobile ; et
- un outil de simulation numérique (M2) modélisant le mobile dans l'environnement réel de navigation, et adapté à fournir des commandes cinématiques au simulateur de mouvements et à la cible, ledit outil de simulation étant alimenté par des commandes de pilotage (P) délivrées par un calculateur du mobile (33) et délivrant, en réponse à ces commandes de pilotage, des points (X) de la trajectoire ;

ledit système comprenant en outre :

- des moyens (51) pour détecter un événement représentatif d'un dépassement ou d'un changement d'un premier objectif désigné pour ce mobile ;
- des moyens (53), activés sur détection d'un tel événement et durant une phase de positionnement associée à un second objectif désigné pour le mobile :

  - pour comparer des positions exécutées par le simulateur de mouvements en réponse à des premières commandes cinématiques de transition avec une première position de consigne prédéterminée, et activer un premier marqueur lorsqu'une position sensiblement égale à la première position de consigne est détectée ; et
  - pour comparer des positions exécutées par la cible en réponse à des secondes commandes cinématiques de transition avec une seconde position de consigne prédéterminée, et activer un second marqueur lorsqu'une position sensiblement égale à la seconde position de consigne est détectée ;

- des moyens (53) pour détecter lorsque les premier et second marqueurs sont activés et pour évaluer, le cas échéant, une différence entre la commande cinématique courante fournie au simulateur de mouvements et la commande cinématique courante fournie à la cible par l'outil de simulation ;
- des moyens (53) pour comparer cette différence avec un seuil déterminé ; et
- des moyens (53), activés lorsque la différence est inférieure audit seuil, pour appliquer, au cours d'une phase de pilotage, des termes correctifs aux commandes cinématiques issues de l'outil de simulation avant leur fourniture au simulateur de mouvements et à la cible, ces termes correctifs étant liés aux positions de consigne.

## Claims

1. A method of estimating a trajectory of a moving body (3) in a real navigation environment, including a digital simulation tool (M2) that is modeling the moving body in this environment supplying (E20) kinematics commands (C11, C12) to a movement simulator (2) on which the moving body is mounted and to a target (4) representative of an objective to be reached by the moving body, said simulation tool being fed (E10) with piloting commands (P) delivered by a computer (33) of said moving body and, in response to these piloting commands, delivering points (X) of the trajectory, said estimation method further including:

• on detection (F10) of an event representative of overshooting or changing a first designated objective for the moving body, a positioning stage ($\varphi$1) associated with a second designated objective for the moving body, the positioning stage including:

  • comparing (F46) positions executed by the movement simulator in response to first transition kinematics commands with a first predetermined setpoint position and activating a first marker (f1) if a position substantially equal to the first setpoint position is detected;
  • comparing (F56) positions executed by the target in response to second transition kinematics commands with a second predetermined setpoint position and activating a second marker ($F_2$) if a position substantially equal to the second setpoint position is detected; and

  • if the first and second markers are activated, a step of evaluating a difference between the current kinematics command supplied to the movement simulator and the current kinematics command supplied to the target by the digital simulation tool; and
  • if this difference is below a particular threshold (F60), a piloting stage ($\varphi$2) including applying (F100) corrective terms linked to said setpoint positions to the kinematics commands coming from the simulation tool before they are fed to the movement simulator and to the target.

2. An estimation method according to claim 1 wherein:

  • said kinematics commands fed by the simulation tool to the movement simulator include a yaw component and said kinematics command fed by the simulation tool to the target include a relative bearing component; and
  • until an event representative of overshooting or changing a first designated objective for this moving body is detected (F10), angular compensation terms are applied (E60) to the yaw components and to the relative bearing components of the kinematics commands before they are fed to the movement simulator and to the target, respectively.

3. An estimation method according to claim 1 or claim 2 wherein, when a change of direction of the moving body is required in order to reach the second objective relative to a direction taken by the moving body to reach the first objective, the positioning stage further includes a step (F30) of determining the direction of rotation of said moving body to change direction and the first and second setpoint positions are chosen as a function of that direction of rotation.

4. An estimation method according to claim 3 wherein the transition kinematics commands fed to the movement simulator and to the target are constant during the determination step.

5. An estimation method according to claim 4 wherein the constant transition kinematics commands include the positions executed by the movement simulator and the target at the moment the event is detected.

6. An estimation method according to any one of claims 3 to 5 wherein the threshold depends on the positions executed by the movement simulator and the target during activation of the first and second markers, respectively, and the direction of rotation of the moving body to change direction.

7. An estimation method according to any one of claims 1 to 6 wherein the piloting stage further includes a step (F90) of evaluating the corrective terms from:

  • positions executed by the movement simulator and the target at the moment of activating the first and second markers, respectively; and
  • kinematics commands supplied by the simulator tool at the moment it is detected that the difference is below the particular threshold.

8. An estimation method according to any one of claims 1 to 7 wherein the piloting commands are evaluated (E100) by the computer of the moving body from:

  • measurement inertial data (R) supplied by an inertial navigation system (31) of the moving body mounted on the movement simulator;
  • simulation inertial data (T2) representative of inertial data deemed to be supplied by the inertial navigation system in the real navigation environment; and

• theoretical inertial data (T1) representative of measurement inertial data supplied by the inertial navigation system and evaluated from kinematics commands executed by the movement simulator.

9. An estimation method according to claim 8 wherein the piloting commands are calculated as a function of inertial data I defined by I = T2 + R - T1 where T2, R, and T1 designate the simulation inertial data, the measurement inertial data, and the theoretical inertial data, respectively.

10. An estimation method according to any one of claims 1 to 9 wherein the second objective is the same as the first objective.

11. An estimation method according to any one of claims 1 to 10 further including a step (F120) of verifying that the moving body reaches the second objective.

12. A hybrid simulation system (1) for estimating a trajectory of a moving body (3) in a real navigation environment, said system including:

• a movement simulator (2) on which the moving body is mounted;
• a target (4) representative of an objective to be reached by the moving body; and
• a digital simulation tool (M2) for modeling the moving body in the real navigation environment and feeding kinematics commands to the movement simulator and the target, said simulation tool being fed with piloting commands (P) delivered by a computer of the moving body (33) and delivering points (X) of the trajectory in response to those piloting commands;
• said system further including:

• means (51) for detecting an event representative of overshooting or changing a first designated objective for the moving body;
• means (53) activated on detection of such an event and during a positioning stage associated with a second designated objective for the moving body:

• for comparing positions executed by the movement simulator in response to first transition kinematics commands with a first predetermined setpoint position and activating a first marker when a position substantially the same as the first setpoint position is detected; and
• for comparing positions executed by the target in response to second transition kinematics commands with a second predetermined setpoint position and activating a second marker when a position substantially the same as the second setpoint position is detected;

• means (53) for detecting when the first and second markers are activated and if applicable evaluating a difference between the current kinematics command fed to the movement simulator and the current kinematics command fed to the target by the simulation tool;
• means (53) for comparing this difference with a particular threshold; and
• means (53) activated when the difference is below said threshold to apply, during a piloting stage, corrective terms linked to the setpoint positions to the kinematics commands coming from the simulation tool before they are fed to the movement simulator and to the target.

**Patentansprüche**

1. Verfahren zur Abschätzung einer Flugbahn eines in Bewegung befindlichen Körpers (3) in einer reellen Navigationsumgebung, umfassend das Liefern (E20) - durch ein digitales Simulationswerkzeug (M2), das den in Bewegung befindlichen Körper in dieser Umgebung modelliert- von kinematischen Befehlen (C11, C12) an einen Bewegungssimulator (2), der den in Bewegung befindlichen Körper aufnimmt, und an ein Target (4), das für ein durch den in Bewegung befindlichen Körper zu erreichendes Ziel repräsentativ ist, wobei das Simulationswerkzeug mit Steuerbefehlen (P), die durch einen Rechner (33) des in Bewegung befindlichen Körpers geliefert werden, gespeist wird und als Reaktion auf diese Steuerbefehle Punkte (X) der Flugbahn liefert, wobei das Schätzungsverfahren ferner umfaßt:

- bei Erfassen (F10) eines Ereignisses, das für ein Überschreiten oder eine Änderung eines für diesen in Bewegung befindlichen Körper designierten ersten Ziels repräsentativ ist, eine Positionierungsphase ($\varphi$1), die

einem für den in Bewegung befindlichen Körper designierten zweiten Ziel zugeordnet ist, umfassend:

- das Vergleichen (F46) von durch den Bewegungssimulator als Reaktion auf erste kinematische Übergangsbefehle ausgeführten Positionen mit einer vorbestimmten ersten Sollposition und das Aktivieren einer ersten Markierung (f1), wenn eine Position erfaßt wird, die im wesentlichen gleich der ersten Sollposition ist,
- das Vergleichen (F56) von durch das Target als Reaktion auf zweite kinematische Übergangsbefehle ausgeführten Positionen mit einer vorbestimmten zweiten Sollposition und das Aktivieren einer zweiten Markierung (f2), wenn eine Position erfaßt wird, die im wesentlichen gleich der zweiten Sollposition ist,

- wenn die erste und die zweite Markierung aktiviert sind, einen Schritt zur Auswertung einer Differenz zwischen dem durch das digitale Simulationswerkzeug an den Bewegungssimulator gelieferten laufenden kinematischen Befehl und dem durch das digitale Simulationswerkzeug an das Target gelieferten laufenden kinematischen Befehl und,
- wenn diese Differenz unterhalb einer bestimmten Schwelle (F60) liegt, eine Steuerphase ($\varphi$2), die die Anwendung (F100) von Korrekturgliedern auf die von dem Simulationswerkzeug kommenden kinematischen Befehle vor ihrer Lieferung an den Bewegungssimulator und an das Target umfaßt, wobei diese Korrekturglieder mit den Sollpositionen verbunden sind.

2. Schätzungsverfahren nach Anspruch 1, wobei:

- die durch das Simulationswerkzeug an den Bewegungssimulator gelieferten kinematischen Befehle eine Gierkomponente umfassen und die durch das Simulationswerkzeug an das Target gelieferten kinematischen Befehle eine Azimutkomponente umfassen, und
- solange kein Ereignis, das für ein Überschreiten oder eine Änderung eines für diesen in Bewegung befindlichen Körper designierten Ziels repräsentativ ist, erfaßt worden ist (F10), auf die Gierkomponenten und auf die Azimutkomponente der kinematischen Befehle ein Winkelkompensationsglied vor ihrer Lieferung an den Bewegungssimulator bzw. an das Target angewandt wird.

3. Schätzungsverfahren nach Anspruch 1 oder 2, wobei, wenn eine Richtungsänderung des in Bewegung befindlichen Körpers zur Erreichung des zweiten Ziels gegenüber einer durch den in Bewegung befindlichen Körper zur Erreichung des ersten Ziels eingeschlagenen Richtung erforderlich ist, die Positionierungsphase ferner einen Schritt (F30) zur Festlegung der durch den in Bewegung befindlichen Körper zur Richtungsänderung angenommenen Rotationsrichtung umfaßt, wobei die erste und die zweite Sollposition in Abhängigkeit dieser Rotationsrichtung gewählt werden.

4. Schätzungsverfahren nach Anspruch 3, wobei während des Festlegungsschrittes die an den Bewegungssimulator und an das Target gelieferten kinematischen Übergangsbefehle konstant sind.

5. Schätzungsverfahren nach Anspruch 4, wobei die konstanten kinematischen Übergangsbefehle die durch den Bewegungssimulator und durch das Target zum Zeitpunkt der Erfassung des Ereignisses ausgeführten Positionen umfassen.

6. Schätzungsverfahren nach einem der Ansprüche 3 bis 5, wobei die Schwelle von den durch den Bewegungssimulator bzw. durch das Target bei der Aktivierung der ersten bzw. der zweiten Markierung ausgeführten Positionen sowie von der durch den in Bewegung befindlichen Körper zur Richtungsänderung angenommenen Rotationsrichtung abhängt.

7. Schätzungsverfahren nach einem der Ansprüche 1 bis 6, wobei die Steuerphase ferner einen Schritt zur Auswertung (F90) der Korrekturglieder umfaßt, anhand:

- der durch den Bewegungssimulator und durch das Target zum Zeitpunkt der Aktivierung der ersten bzw. der zweiten Markierung ausgeführten Positionen sowie
- der kinematischen Befehle, die durch das Simulationswerkzeug zu dem Zeitpunkt geliefert werden, zu dem erfaßt wird, daß die Differenz unterhalb der bestimmten Schwelle liegt.

8. Schätzungsverfahren nach einem der Ansprüche 1 bis 7, wobei die Steuerbefehle durch den Rechner des in Bewegung befindlichen Körpers ausgewertet werden (E100) anhand von:

- inertialen Meßdaten (R), die durch ein Trägheitsnavigationssystem (31) des an dem Bewegungssimulator aufgenommenen in Bewegung befindlichen Körpers geliefert werden,
- inertialen Simulationsdaten (T2), die für Inertialdaten repräsentativ sind, welche als durch das Trägheitsnavigationssystem in der reellen Navigationsumgebung geliefert betrachtet werden, und
- theoretischen Inertialdaten (T1), die für die durch das Trägheitsnavigationssystem gelieferten inertialen Meßdaten repräsentativ sind, wobei diese theoretischen Inertialdaten anhand von durch den Bewegungssimulator ausgeführten kinematischen Befehlen ausgewertet werden.

9. Schätzungsverfahren nach Anspruch 8, wobei die Steuerbefehle in Abhängigkeit von Inertialdaten I berechnet werden, die durch I = T2+R-T1 definiert sind, worin T2, R und T1 die inertialen Simulationsdaten, die inertialen Meßdaten bzw. die theoretischen Inertialdaten bezeichnen.

10. Schätzungsverfahren nach einem der Ansprüche 1 bis 9, wobei das zweite Ziel dem ersten Ziel entspricht.

11. Schätzungsverfahren nach einem der Ansprüche 1 bis 10, ferner umfassend einen Schritt zur Überprüfung (F120), ob das zweite Ziel von dem in Bewegung befindlichen Körper erreicht ist.

12. Hybrides Simulationssystem (1), das die Abschätzung einer Flugbahn eines in Bewegung befindlichen Körpers (3) in einer reellen Navigationsumgebung ermöglicht, wobei das System umfaßt:

- einen Bewegungssimulator (2), der den in Bewegung befindlichen Körper aufnimmt,
- ein Target (4), das für ein von dem in Bewegung befindlichen Körper zu erreichendes Ziel repräsentativ ist, und
- ein digitales Simulationswerkzeug (M2), das den in Bewegung befindlichen Körper in der reellen Navigationsumgebung modelliert und dafür ausgelegt ist, an den Bewegungssimulator und an das Target kinematische Befehle zu liefern, wobei das Simulationswerkzeug mit Steuerbefehlen (P), die durch einen Rechner (33) des in Bewegung befindlichen Körpers geliefert werden, gespeist wird und als Reaktion auf diese Steuerbefehle Punkte (X) der Flugbahn liefert,

wobei das System ferner umfaßt:

- Mittel (51) zum Erfassen eines Ereignisses, das für ein Überschreiten oder eine Änderung eines für diesen in Bewegung befindlichen Körper designierten ersten Ziels repräsentativ ist,
- Mittel (53), die bei Erfassen eines solchen Ereignisses und während einer Positionierungsphase, die einem für den in Bewegung befindlichen Körper designierten zweiten Ziel zugeordnet ist, aktiviert werden:

- um durch den Bewegungssimulator als Reaktion auf erste kinematische Übergangsbefehle ausgeführte Positionen mit einer vorbestimmten ersten Sollposition zu vergleichen und eine erste Markierung zu aktivieren, wenn eine Position erfaßt wird, die im wesentlichen gleich der ersten Sollposition ist, und
- um durch das Target als Reaktion auf zweite kinematische Übergangsbefehle ausgeführte Positionen mit einer vorbestimmten zweiten Sollposition zu vergleichen und eine zweite Markierung zu aktivieren, wenn eine Position erfaßt wird, die im wesentlichen gleich der zweiten Sollposition ist,

- Mittel (53) zur Erfassung wenn die erste und die zweite Markierung aktiviert sind und gegebenenfalls zur Auswertung einer Differenz zwischen dem durch das Simulationswerkzeug an den Bewegungssimulator gelieferten laufenden kinematischen Befehl und dem durch das Simulationswerkzeug an das Target gelieferten laufenden kinematischen Befehl,
- Mittel (53), um diese Differenz mit einer bestimmten Schwelle zu vergleichen, sowie
- Mittel (53), die aktiviert werden, wenn die Differenz unterhalb der Schwelle liegt, um im Laufe einer Steuerphase Korrekturglieder auf die von dem Simulationswerkzeug kommenden kinematischen Befehle vor ihrer Lieferung an den Bewegungssimulator und an das Target anzuwenden, wobei diese Korrekturglieder mit den Sollpositionen verbunden sind.

FIG.1

**FIG.2**

F10 — Détection d'un dépassement de l'objectif
Activation de T

T=1

f1

F20 — Mémorisation de C11,C21,C14 et C24

F30 — Détermination du sens de rotation du mobile

F40

ℓC14-P1>0 ? — non

oui — F42

F44

Déplacement de l'axe de lacet du mobile dans le sens antihoraire

Déplacement de l'axe de lacet du mobile dans le sens horaire

F50

non — ℓC24-P2>0 ?

oui — F52

F54

Déplacement de l'axe de gisement de la cible dans le sens horaire

Déplacement de l'axe de gisement de la cible dans le sens antihoraire

F46

non — ℓC14 à P1 ?

oui

F56 — ℓC24 à P2 ? — non

oui

F48 — f1 activé

f1=1

f2 activé — F58

f2=1

F60 — Condition (1) ou (2) vérifiée ? — oui

non

F70 — Fourniture de ℓC13(i1) au simulateur de mouvements et de ℓC23(i2) à la cible

vers F80

# FIG.3A

de F60,F70

F2

F80 — f3 activé

F90 — Mémorisation des composantes de lacet et de gisement à l'itération i3- Evaluation de D2 et D3

Application de D2 et D3 jusqu'à la fin de la 2nde partie — F100

non — Fin de la 2nde partie ? — F110

oui

F120 — Objectif atteint ? — non

oui

F130 — Capacité de réattaque ok

Mobile invalidé — F140

# FIG.3B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1909067 A
- FR 2927418
- FR 0850793
- WO 2927418 A